(19) Europäisches Patentamt / European Patent Office / Office européen des brevets

(11) **EP 4 723 060 A1**

(12) **EUROPEAN PATENT APPLICATION**
published in accordance with Art. 153(4) EPC

(43) Date of publication:
08.04.2026 Bulletin 2026/15

(21) Application number: 24814238.2

(22) Date of filing: 20.05.2024

(51) International Patent Classification (IPC):
*G06V 20/62* (2022.01)          *G06V 10/20* (2022.01)
*G06V 10/82* (2022.01)

(52) Cooperative Patent Classification (CPC):
G06V 20/62; G06V 10/255; G06V 10/82

(86) International application number:
PCT/CN2024/094279

(87) International publication number:
WO 2024/245039 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.05.2023 CN 202310609506

(71) Applicant: Vivo Mobile Communication Co., Ltd.
Dongguan, Guangdong 523863 (CN)

(72) Inventor: MAO, Ailing
Dongguan, Guangdong 523863 (CN)

(74) Representative: Conti, Marco
Bugnion S.p.A.
Via di Corticella, 87
40128 Bologna (IT)

(54) **IMAGE PROCESSING METHOD AND APPARATUS, AND ELECTRONIC DEVICE**

(57) Disclosed are an image processing method and apparatus, and an electronic device, which belong to the technical field of electronic devices. The image processing method includes: obtaining a first image; detecting a target region within the first image, where the target region includes at least one text region and at least one image region; determining a private region based on the target region; and performing privacy processing on the private region, and obtaining a processed second image.

FIG. 1

EP 4 723 060 A1

**Description**

**CROSS-REFERENCE TO RELATED APPLICATIONS**

The present disclosure claims the benefit of priority to Chinese Patent Application No. 202310609506.1, filed with the China National Intellectual Property Administration on May 26, 2023 and entitled "Image processing method and apparatus, and electronic device", which is incorporated in its entirety herein by reference.

**TECHNICAL FIELD**

The present disclosure belongs to the technical field of image processing, and particularly relates to an image processing method and apparatus, and an electronic device.

**BACKGROUND**

At present, after obtaining an image (such as a screenshot), a user generally shares the image. The image contains plenty of private information of a user. In consideration of information security, the private information is required to be concealed before sharing. However, in the prior art, the private information in the image cannot be automatically positioned, and pixelated through a one-click/one-tap operation. The user is required to manually crop out a private region by using a picture cropping tool, or manually pixelate each designed private region by using a picture blurring tool. Consequently, the operation is laborious.

**SUMMARY**

An objective of embodiments of the present disclosure is to provide an image processing method and apparatus, and an electronic device, which can resolve a problem that a method for pixelating private information in an image in the prior art is laborious.
In a first aspect, an embodiment of the present disclosure provides an image processing method. The method includes:

obtaining a first image;
detecting a target region within the first image, where the target region includes at least one text region and at least one image region;
determining a private region based on the target region; and
performing privacy processing on the private region, and obtaining a processed second image.

In a second aspect, an embodiment of the present disclosure provides an image processing apparatus. The apparatus includes:

a first obtaining module configured to acquire a first image;
a detecting module configured to detect a target region within the first image, where the target region includes at least one text region and at least one image region;
a first determining module configured to determine a private region based on the target region; and
a processing module configured to perform privacy processing on the private region, and obtain a processed second image.

In a third aspect, an embodiment of the present disclosure provides an electronic device. The electronic device includes a processor and a memory. The memory stores a program or an instruction capable of being run on the processor. The program or the instruction, when executed by the processor, implements steps of the method mentioned in the first aspect.
In a fourth aspect, an embodiment of the present disclosure provides a readable storage medium. The readable storage medium stores a program or an instruction. The program or the instruction, when executed by a processor, implement steps of the method mentioned in the first aspect.
In a fifth aspect, an embodiment of the present disclosure provides a chip. The chip includes a processor and a communication interface. The communication interface is coupled to the processor. The processor is configured to run a program or an instruction, to implement steps of the method mentioned in the first aspect.
In a sixth aspect, an embodiment of the present disclosure provides a computer program product. The program product is stored in a storage medium. The program product is executed by at least one processor to implement steps of the method mentioned in the first aspect.

In a seventh aspect, an embodiment of the present disclosure provides an electronic device. The electronic device is configured to perform steps of the method mentioned in the first aspect.

In embodiments of the present disclosure, an image processing method includes: obtaining a first image; detecting a target region within the first image, where the target region includes at least one text region and at least one image region; determining a private region based on the target region; and performing privacy processing on the private region, and obtaining a processed second image. In this way, private information in an image can be automatically processed for a user, time of an operation by the user is saved, and efficiency of the operation by the user is improved.

## BRIEF DESCRIPTION OF THE DRAWINGS

FIG. 1 is a flowchart of an image processing method according to an embodiment of the present disclosure;
FIG. 2 is a first schematic structural diagram of a network model according to an embodiment of the present disclosure;
FIG. 3 is a schematic structural diagram of SPPF according to an embodiment of the present disclosure;
FIG. 4 is a schematic structural diagram of CSP1_x according to an embodiment of the present disclosure;
FIG. 5 is a schematic structural diagram of a Res unit according to an embodiment of the present disclosure;
FIG. 6 is a schematic diagram of a multibranch block having three convolution kernels of different sizes according to an embodiment of the present disclosure;
FIG. 7 is a schematic diagram of one type of detection head according to an embodiment of the present disclosure;
FIG. 8 is a schematic diagram of another type of detection head according to an embodiment of the present disclosure;
FIG. 9 is a first schematic diagram of a first image according to an embodiment of the present disclosure;
FIG. 10 is a second schematic diagram of a first image according to an embodiment of the present disclosure;
FIG. 11 is a structural block diagram of an image processing apparatus according to an embodiment of the present disclosure;
FIG. 12 is a schematic structural diagram of an electronic device according to an embodiment of the present disclosure; and
FIG. 13 is a schematic diagram of a hardware structure of an electronic device according to an embodiment of the present disclosure.

## DETAILED DESCRIPTION

Technical solutions in embodiments of the present disclosure will be clearly described below in combination with accompanying drawings in the embodiments of the present disclosure. Apparently, the described embodiments are merely some embodiments rather than all embodiments of the present disclosure. All other embodiments obtained by a person of ordinary skill in the art based on the embodiments of the present disclosure fall within the scope of protection of the present disclosure.

The terms "first" and "second" in the description and claims of the present disclosure are used for distinguishing between similar objects, but are not used for describing a specific sequence or order. It should be understood that the terms used in such a way are interchangeable in proper circumstances, such that the embodiments of the present disclosure can be implemented in other sequences than those illustrated or described herein. Moreover, the objects distinguished through "first", "second", etc. are generally of a same type, and a number of objects are not limited. For example, one or more first objects may be provided. In addition, in the description and the claims, "and/or" denotes at least one of connected objects, and the character "/" generally denotes an "or" relationship between associated objects.

An image processing method provided in embodiments of the present disclosure is described in detail below in combination with accompany drawings and through particular embodiments and their application scenarios.

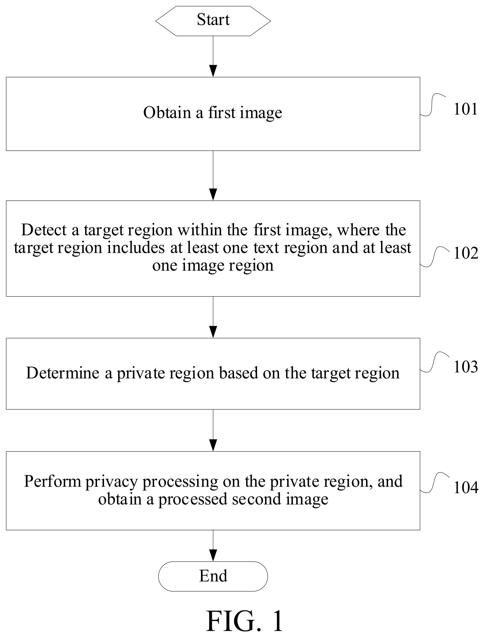

With reference to FIG. 1, an embodiment of the present disclosure provides an image processing method. The method includes:

Step 101: A first image is obtained.

Optionally, the first image includes a screenshot image (such as a chat interface screenshot or a user detail page screenshot), a stored image, a photo, etc.

Optionally, a style of the first image includes but is not limited to a single-screen image style, a double-screen image style, and a long image style.

Step 102: A target region within the first image is detected. The target region includes at least one text region and at least one image region.

For example, the text region includes at least one of the following: a user information region (such as personal basic information, device information, behavior information, and location information), a chat content region, a chat member nickname region, a group name region, and a time information region. The image region includes at least one of the following: a person image region, an object image region, etc. For example, the image region for the chat interface screenshot includes: a profile picture region, a chat emoticon region, and a chat picture region.

Step 103: A private region is determined based on the target region.

For example, in a case of the chat interface image, the private region includes: a chat member nickname region, a profile picture region, and a group name region.

Step 104: Privacy processing is performed on the private region, and a processed second image is obtained.

For example, the privacy processing includes: mosaic processing, predetermined picture coverage processing, hiding processing, erasure processing, etc.

In the embodiment, after a first image is obtained, detection is performed, and a target region within the first image is obtained; a private region is determined based on the target region; and privacy processing is performed on the private region. In this way, private information in a first image can be automatically hidden for a user, time of an operation by the user is saved, and efficiency of the operation by the user is improved.

In an embodiment, in step 102 mentioned above, a target region within the first image is detected, which includes:

feature maps are extracted from a top layer, a middle layer, and a bottom layer of the first image by using a backbone network of a network model;
concatenation is performed on the feature maps by using a feature fusion network of the network model, and an enhanced feature map is obtained; and
the enhanced feature map is inputted into a head prediction network of the network model, and the target region is obtained, where the head prediction network includes two types of detection heads, one type of detection head is configured to predict the at least one image region, the other type of detection head is configured to predict the at least one text region, and a detection box outputted by each detection head includes three pieces of feature information as follows: a category of the detection box being a text or an image, a location of the detection box, and a confidence level of the detection box.

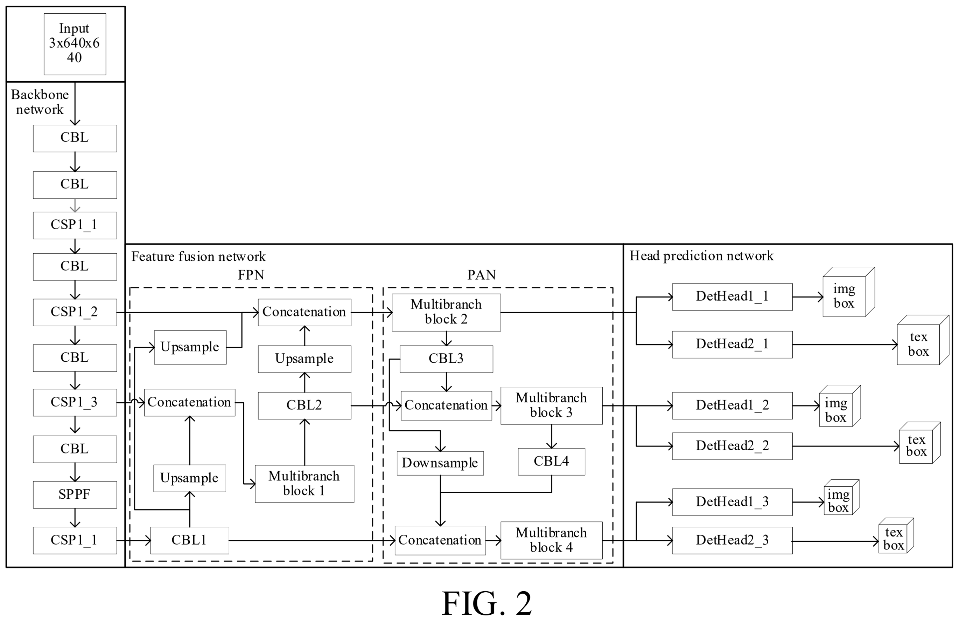

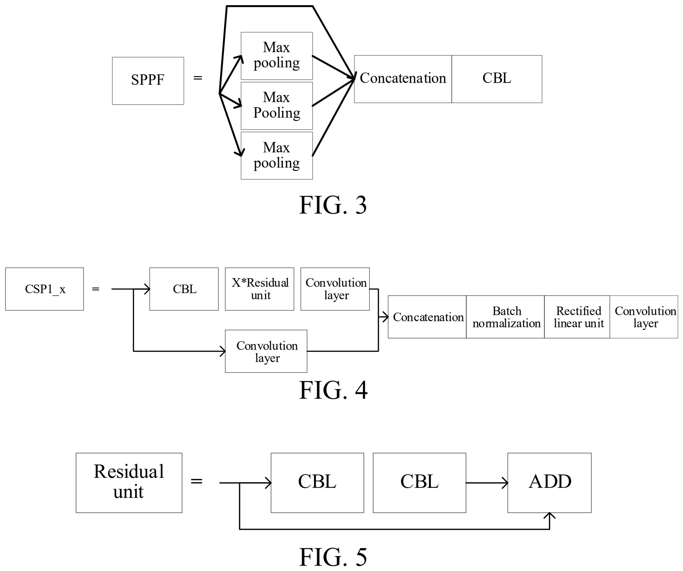

As shown in FIG. 2, the network model includes three portions: a backbone network (Backbone), a feature fusion network (Neck), and a head prediction network (Head). Specifically,
firstly, the backbone network Backbone is mainly used for extracting features of different sizes within the first image. A network structure of CSPdarknet53 is used. An input size is 640*640*3. Output is three feature vectors of different sizes: 64*80*80, 128*40*40, and 256*20*20. A parameter set of the network structure is the same as that of yolov5n. A convolutional block layer CBL in the Backbone is a basic module generally used in a convolutional neural network. The CBL is composed of three portions: a convolution layer (Conv), batch normalization (Batch Normalization, BN), and a rectified linear unit (Rectified Linear Unit, relu). Moreover, SPPF in the Backbone is a module that is further improved based on an SPP (space pyramid pooling) module. A specific structure of the SPPF is shown in FIG. 3. Specifically, Max Pool refers to maximum pooling, CSP1_1 is used for extracting features having a plurality of sizes of a top layer, CSP1_2 is used for extracting features having a plurality of sizes of a bottom layer, and CSP1_3 is used for extracting features having a plurality of sizes of a middle layer. As shown in FIG. 4, a structural diagram of CSP1_x(CSP1_1, CSP1_2, CSP1_3) is shown. A specific structure of a residual unit Res unit is shown in FIG. 5.

Secondly, in a case of the feature fusion network, the Neck module fuses features having a plurality of sizes of the top layer, features having a plurality of sizes of the middle layer, and features having a plurality of sizes of the bottom layer which are extracted by the backbone, to obtain higher-layer features.

Thirdly, in a case of the head module, a current common target detection model yolo outputs a regression box and a confidence level at a same detection head through 1*1 convolution. However, in a solution of the present disclosure, profile picture detection and text detection are decoupled from each other. Moreover, classification (cls) and regression (reg, conf) of each detection head are decoupled from each other. Thus, a network model that can detect a profile picture and a text at the same time is provided.

Specifically, the head module in the present disclosure includes two types of detection heads: DetHead1 and DetHead2. Each type of head is applied after three features of different sizes outputted by the Neck network.

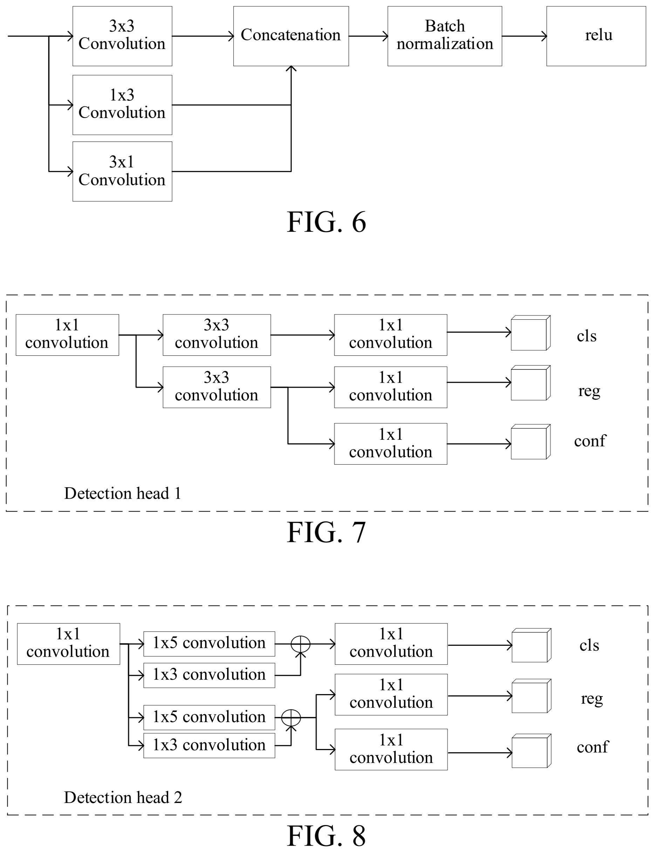

As shown in FIG. 7, in detection head 1 (DetHead1_x), a dimension is first reduced through 1*1 convolution. Then, a classification task feature and a regression task feature are decoupled from each other by connecting two pieces of 3*3 convolution in parallel. Finally, a dimension is reduced, by connecting 1*1 convolution on three branches, to an output dimension which is suitable for detecting a relatively square profile picture box.

As shown in FIG. 8, detection head 2 (DetHead2_x) is designed for an elongated text line in the present disclosure. Firstly, a dimension is reduced through 1*1 convolution. Then, a classification task feature and a regression task features are decoupled from each other by using two branch convolution structures. Since the text line is in an elongated shape having different lengths in a plurality of dimensions, each branch extracts a feature by using a 1*5 convolution structure and a 1*3 convolution structure through a stacking method. Finally, each branch reduces a dimension to an output dimension through 1*1 convolution.

For example, a network layer parameter configuration of the Head module is shown in Table 1.

Table 1

| Head | Output channel (from top to bottom) | Output size |
|---|---|---|
| DetHead1_1 | 32, 32, 3, 32, 4, and 1 | 1*C*80*80, 1*4*80*80, and 1*1*80*80 |
| DetHead1_2 | 32, 32, 3, 32, 4, and 1 | 1*C*80*80, 1*4*80*80, and 1*1*80*80 |
| DetHead2_1 | 32, 32, 3, 32, 4, and 1 | 1*C*40*40, 1*4*40*40, and 1*1*40*40 |
| DetHead2_2 | 32, 32, 3, 32, 4, and 1 | 1*C*40*40, 1*4*40*40, and 1*1*40*40 |
| DetHead3_1 | 32, 32, 3, 32, 4, and 1 | 1*C*20*20, 1*4*20*20, and 1*1*20*20 |
| DetHead3_2 | 32, 32, 3, 32, 4, and 1 | 1*C*20*20, 1*4*20*20, and 1*1*20*40 |

In an optional embodiment, a detection box outputted by each detection head includes three pieces of feature information as follows: a category of the detection box being a text or an image, a location of the detection box, and a confidence level of the detection box.

As shown in FIG. 7 and FIG. 8, cls has a size of 1*C*H*W, and denotes a category of each detection box; reg has a size of 1*4*H*W, and denotes a location of the detection box (that is, a location in a screenshot); and conf has a size of 1*1*H*W, and denotes a confidence level of the detection box. Moreover, C is a number of categories, and is 2 (that is, a text and an image) in the present disclosure; H*W denotes an output size such as 20*20; and location information (x, y, w, h) of the detection box is included, (x, y) denotes coordinates of a center of the box, and (w, h) denotes a width and a height of the detection box.

It should be noted that as shown in FIG. 2, after the Neck module outputs a feature having one size, two types of detection heads are connected. One detection head (DetHead1_x) is configured to output an image detection box (img box), and the other detection head (DetHead2_x) is configured to output a text detection box (text box). It should be noted that each detection box corresponds to a text region or an image region.

It should be noted that a to-be-detected target within the first image includes two types: a profile picture and a text. The profile picture is mostly in a square shape or a circular shape, and region content is abundant and continuous. The text line is mostly in a transverse elongated shape having different lengths, and content is discontinuous. Thus, features of the two types of targets are extremely different. If the text line is detected by directly using an existing general target detection model, it is difficult to satisfy a requirement. However, few existing target detection models can directly detect the two types of targets at the same time. In this case, in the above embodiment of the present disclosure, target detection of a text category and target detection of a profile picture type are decoupled from each other. A network model that can detect a profile picture and a text at the same time is provided.

Optionally, in post-processing of the network model, a candidate box may be filtered through NMS (non-maximum suppression) at a derivation stage, to obtain a final detection result.

In an optional embodiment, the feature fusion network includes an FPN structure and a PAN structure that are sequentially connected. A cross stage partial network CspNet in the FPN structure and a cross stage partial network in the PAN structure are replaced with multibranch block (MutilBranchBlock). Each multibranch block includes three convolution kernels of different sizes. concatenation is performed on the feature maps by using a feature fusion network of the network model, and an enhanced feature map is obtained, which include:

As shown in FIG. 2, the feature map (that is, output of CSP1_1 in FIG. 2) of the top layer extracted by the backbone network is inputted into a convolutional block layer (CBL) 1 (that is, CBL1 in FIG. 2) of the FPN structure. The feature map (that is, output of CSP1_3 in FIG. 2) of the middle layer extracted by the backbone network is inputted into a multibranch block 1 (MutilBranchBlock1) of the FPN structure. Output of the multibranch block 1 is taken as input of a CBL 2 (that is, CBL2 in FIG. 2).

A feature map outputted by the CBL 1 is upsampled (that is, Upsample), concatenation (that is, concatenate) is performed on the feature map, the feature map (that is, output of CSP1_2 in FIG. 2) of the bottom layer extracted by the backbone network, and a feature map outputted by the CBL 2. A feature map after the concatenation is taken as input of a multibranch block 2 (MutilBranchBlock2) in the PAN structure.

Output of the multibranch block 2 is taken as input of a CBL 3 (that is, CBL3 in FIG. 2) in the PAN structure. Output of the CBL 2 is taken as input of the multibranch block 3 (MutilBranchBlock3) in the PAN structure. Output of the multibranch block 3 is taken as input of a CBL 4 (that is, CBL4 in FIG. 2) in the PAN structure.

A feature map outputted by the CBL 3 is downsampled (Down sample), concatenation is performed on the feature map, the feature map of the top layer extracted by the backbone network, and a feature map outputted by the CBL 4. The feature map after the concatenation is taken as input of a multibranch block 4 (MutilBranchBlock4). The enhanced feature map is outputted by using the multibranch block 4.

Specifically, as shown in FIG. 2, two types of detection heads are connected to each of an output end of a multibranch block 2, an output end of a multibranch block 3, and an output end of a multibranch block 4. One type of detection head is configured to predict the at least one image region. The other type of detection head is configured to predict the at least one text region.

In the embodiment, the FPN+PAN structure used in the yolo5 is still used in the feature fusion network, and the following two improvements are made.

Improvement 1: A multibranch block (MutilBranchBlock) is designed to replace the CspNet in the yolo5 to set up the Neck module. As shown in FIG. 2 and FIG. 6, a multibranch block having three convolution kernels of different sizes (such as 3*3, 1*3, and 3*1) is used in the block such that richer target features can be extracted in a horizontal direction and a vertical direction.

Improvement 2: Feature fusion of a bottom-layer structure and a top-layer structure of an FPN+PAN structure is added. As shown in FIG. 2, in the FPN structure, input of a multibranch block 2 is a result of stacking (performing concatenation on features) output of CSP1_2 and output of CBL2. A result of CBL1 is upsampled, and then the result and the input of a multibranch block 2 are stacked. Similarly, in the PAN structure, a feature outputted by the CBL3 is downsampled, and then added to input of a multibranch block 4. In this way, by adding a network connection between a bottom-layer structure and a top-layer structure, features of different sizes can be better fused together. Thus, a better detection effect can be obtained.

For example, a network layer parameter in a Neck module can be shown in Table 2.

Table 2

| Network layer | Size of convolution kernel | Step length | Output size |
|---|---|---|---|
| CBL1 | 1*1 | 1 | 1*128*20*20 |
| Multibranch block 1 | 3*3, 1*3, and 3*1 | 1 | 1*128*40*40 |
| CBL2 | 1*1 | 1 | 1*64*40*40 |
| Multibranch block 2 | 3*3, 1*3, and 3*1 | 1 | 1*64*80*80 |
| CBL3 | 3*3 | 2 | 1*128*40*40 |
| Multibranch block 3 | 3*3, 1*3, and 3*1 | 1 | 1*128*40*40 |
| CBL4 | 3*3 | 2 | 1*128*20*20 |
| Multibranch block 4 | 3*3, 1*3, and 3*1 | 1 | 1*256*20*20 |

In an optional embodiment, the above method further includes: model training is performed by using at least one of the following loss functions, to obtain a network model.

Loss function 1: binary cross entropy BCE loss function for classification.

In an embodiment of the present disclosure, BCE_Loss is used for a classification loss. Output of the network model includes category information (a text detection box or a profile picture detection box) of each detection box, and a probability value belonging to each of a text category or a profile picture category. A maximum probability is taken as a category of a corresponding detection box. A detection box outputted by an initial model can be more accurately classified into a corresponding category by using the this loss function. Thus, a possibility of false detection can be reduced.

Loss function 2: Focal loss function for computing confidence level

In an embodiment of the present disclosure, Focal_loss is used for a confidence level loss. A confidence level value corresponding to each detection box in the output of the network model denotes a confidence level at which the detection box is a true target box. In a model optimization process, a detection box including more target regions (through IOU computation) has a higher confidence level. A detection box including no target has a confidence level of 0. In a model reasoning process, each outputted detection box has a corresponding confidence level. In post-processing, a detection box having a confidence level less than a set threshold is deleted. Thus, a number of false detection boxes is reduced, to improve an effect of target detection.

Loss function 3: CIoU loss function for constraining location of image detection box

In an embodiment of the present disclosure, the location of the profile picture detection box is constrained by using the CIoD. By using the loss, a relatively large area overlap exists between the detection box outputted by the network model and a true detection box. Thus, the location of the detection box is more accurate.

Loss function 4: TIoU loss function for constraining location of detection box of text

In an embodiment of the present disclosure, the TIoU is a loss function specifically designed for an elongated text line. A feature of the text is that even if few regions are missing, the text can still be subjectively recognized by people, and privacy protection cannot be achieved by pixelating only some text regions. Thus, for a text line detection result, in addition to a high percentage of an overlapping area of a detection box outputted by the network model and a GT (Ground Truth, referring to a box as a standard answer), a greater number of true texts that can be recognized through an optical character recognition (Optical Character Recognition, OCR) algorithm in a text box detected by the network model is required. In this way, private information of the text can be more completely protected after privacy pixelating. In the present disclosure, by adding the TIOU loss function, a text detection box outputted by the network model can cover a location of a text more accurately.

Optionally, in an embodiment of the present disclosure, a computation formula for the TIoU loss function is as follows:

$$\text{TIoU} = ln^{\displaystyle inter(char_{pred}, char_{gt})} \Big/ {union(char_{pred}, char_{gt})}.$$

Specifically, inter refers to computation of an intersection set, union refers to computation of a union set, char_pred refers a character of a predicated text box subjected to OCR detection, har_gt refers to a character of a true value box subjected to OCR detection, pred denotes a network prediction result, and gt denotes a manually marked true value. Herein, the true value box can be taken as a detection box of a standard answer.

In an optional embodiment, each detection head in the head prediction network includes: a TIoU loss function, a CIoU loss function, a Focal loss function, and a BCE loss function.

For example, a computation formula for an overall loss function is as follows:

$$loss = \sum_{detBlock} \begin{pmatrix} BCEloss(cls_{pred}, cls_{gt}) + Focalloss(conf_{pred}, conf_{gt}) \\ -CIoU(reg_{pred}, reg_{gt}) - TIoU(reg_{pred}, reg_{gt}) \end{pmatrix}.$$

It should be noted that the above computation formula for the overall function is merely an example. When an overall loss function corresponding to each detection head is computed, different weights may be correspondingly allocated to each type of loss function. In cases of the TIoU loss function and the CIoU loss function, a less computed loss value is better. In cases of the Focal loss function and the BCE loss function, a greater computed loss value is better. To enable a computation formula for an overall loss function combining four types of loss functions to accurately measure a deviation between a model prediction result and a true result, in the above formula for the overall loss function: minus signs exist before computed values of $CIoU(reg_{pred}, reg_{gt})$ and $TIoU(reg_{pred}, reg_{gt})$, and plus signs exist before computed values of $BCEloss(cls_{pred}, cls_{gt})$ and $Focalloss(conf_{pred}, conf_{gt})$.

In a training process of the network model, an input size of the network model is 640*640*3, and an epoch number is set as 150 in the training process. In a reasoning process, the first image is first reduced to a size of 640*640, and then is sequentially inputted into the network model. A profile picture detection box and a text detection box are obtained through reasoning by the network model. Then, coordinates of locations of these detection boxes are mapped back to the first image originally inputted. That is, a location of the profile picture detection box is an image region within the target region. A location of the text detection box is a text region within the target region.

In an optional embodiment, in step 103 mentioned above, a private region is determined based on the target region, which includes:

based on a vertical center line of the first image, the at least one image region within the target region is divided into a first set located to a left side of the vertical center line and a second set located to a right side of the vertical center line;
based on an abscissa of the image region in the first set, a first set of profile picture regions located to the left side is determined from the first set;
based on an abscissa of the image region in the second set, a second set of profile picture regions located to the right side is determined from the second set; and
the private region is determined based on the first set of profile picture regions and the second set of profile picture regions.

During particular implementation, when the first image is a chat interface image, after the at least one image region within the first image is detected by using the network model, to recognize a profile picture region located to the left side of the chat interface and a profile picture region located to the right side of the chat interface, in the embodiment, by using the vertical center line of the first image, the at least one image region outputted by the network model is divided into a first set located to the left side of the vertical center line and a second set located to the right side of the vertical center line. That is, a profile picture on the left side of the chat interface is located in the first set, and a profile picture on the right side of the chat interface is located in the second set.

Further, in a case of the chat interface image, abscissa ranges of profile picture regions located to the left side of a chat interface screenshot are the same, and abscissa ranges of profile picture regions located to the right side of the chat interface screenshot are also the same. Thus, in the present disclosure, in cases of the image regions in the first set and the image regions in the second set, the image regions in the first set are projected to a horizontal line, such that a first overlapping region having a maximum number of overlapping abscissas is obtained. In a case of each image region in the first set, if the projected image region includes the first overlapping region, it is determined that the image region is a profile picture region, and a first set of profile picture regions are finally obtained. Similarly, the image regions in the second set are all projected to a horizontal line, and a second overlapping region having a maximum number of overlapping abscissas is obtained. In a case of each image region in the second set, if the projected image region includes the second overlapping region, it is determined that the image region is a profile picture region, and a second set of profile picture regions are finally obtained.

In the above embodiment, the first set of profile picture regions and the second set of profile picture regions that are obtained may be determined as a user profile picture portion in the private region. Or, profile picture regions may be further filtered based on the first set of profile picture regions and the second set of profile picture regions. Or, user nickname detection may be performed based on the first set of profile picture regions and the second set of profile picture regions.

In cases of further filtration and detection of a user profile picture, in an optional embodiment, the private region is determined based on the first set of profile picture regions and the second set of profile picture regions, which includes:

sliding is performed by using a sliding window within a target vertical region of the first image based on a predetermined step length, and N pixels within the sliding window are obtained, where N is a positive integer, the target vertical region corresponding to the first set of profile picture regions is a first vertical region located to the left side, and the target vertical region corresponding to the second set of profile picture regions is a second vertical region located to the right side;

based on three-channel color differences between the N pixels and corresponding pixels in a first region, whether an image within the sliding window matches the first region is determined, where the first region is any profile picture region in the first set of profile picture regions and the second set of profile picture regions;

when the image within the sliding window matches the first region, profile picture regions of the first set of profile picture regions and the second set of profile picture regions are traversed, and intersection over union between each profile picture region and the image region within the sliding window is determined; and

when intersection over union between a profile picture region and the image region within the sliding window being less than a second predetermined value exists in the first set of profile picture regions and the second set of profile picture regions, the image region within the sliding window, the first set of profile picture regions, and the second set of profile picture regions are determined as a user profile picture portion in the private region.

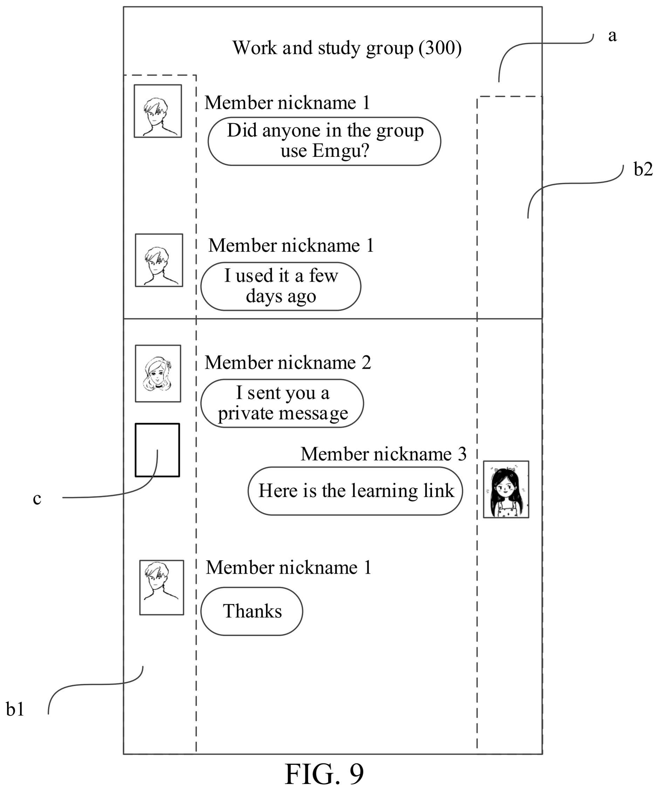

As shown in FIG. 9, in a case of profile picture region detection on the left side of the chat interface, a sliding window c having a same size as a profile picture box is used to perform sliding from top to bottom in a first vertical region b1 based on a predetermined step length. Each time the sliding is performed by one step length, N pixels within the sliding window c are randomly obtained, and RGB three-channel color differences between the N pixels and any profile picture region A in the first set of profile picture regions are computed. Similarly, in a case of profile picture region detection on the right side of the chat interface, a sliding window c having a same size as a profile picture box is used to perform sliding from top to bottom in a second vertical region b2 based on a predetermined step length. Each time the sliding is performed by one step length, N pixels within the sliding window c are randomly obtained, and RGB three-channel color differences between the N pixels and any profile picture region A in the second set of profile picture regions are computed.

Specifically, a computation formula for an RGB three-channel color difference is as follows:
$D(A, c) = \sum_{i \in A, j \in c} |r_i - r_j| + |b_i - b_j| + |g_i - g_j|$. Specifically, a relative location of a pixel i in the profile picture region A and a relative location of a pixel j within the sliding window c are the same; and RGB three channels are R (red), G (green), and B (blue) respectively.

Further, with the first vertical region b1 as an example, if an average color difference between each pixel j extracted from the sliding window c and a pixel i is less than a first predetermined threshold (such as 20), it is determined that the pixel j and the pixel i match each other. When the sliding window c matches the profile picture region A, intersection over union, that is, IOU, between the sliding window c and each profile picture region c in the profile picture region set is computed. If the IOU is less than a second predetermined threshold (such as 0.1), it is determined that a region within the sliding window c also belongs to a profile picture region and should be added into the first set of profile picture regions, and the region within the sliding window c and the profile picture region A are marked as profile pictures of a same contact. On the contrary, if the IOU is greater than or equal to the second predetermined threshold, the profile picture region A and the profile picture region C are marked as profile pictures of a same contact, and are not required to be added into the first set of profile picture regions.

In a case of nickname detection, in an optional embodiment, after an image region within the sliding window, the first set of profile picture regions, and the second set of profile picture regions are determined as a user profile picture portion in the private region, the method further includes:

based on a location relationship between a user profile picture region and a nickname area of a chat group member, the nickname area of the chat group member is determined from the at least one text region within the target region; and

the nickname area of the chat group member is determined as a nickname portion in the private region.

In the embodiment, in a case of nickname detection, based on statistical historical information or historical probability of an APP, it can be known in advance that a nickname can only appear next to a profile picture, and has a fixed location relationship with the nickname. Thus, in an embodiment of the present disclosure, based on a location relationship between a user profile picture region and a nickname area of a chat group member, the nickname area of the chat group member is determined from the at least one text region within the target region.

During particular implementation, in a case of a chat interface image, coordinates of an upper left corner of the profile picture region are first marked as ($head_{left}$, $head_{up}$). A width and a height of the profile picture region are head_w and head_h respectively. Coordinates of an upper left corner of the text region are ($text_{left}$, $text_{up}$). Coordinates of a lower right corner are ($text_{right}$, $text_{bottom}$).

Secondly, the following corresponding historical information is obtained based on a type of an APP to which the chat interface screenshot belongs.

(1) A minimum distance between a profile picture box (each profile picture region corresponds to one profile picture box) and a nickname box (each text region corresponds to one nickname box) is $l\_min$. The profile picture box is a profile picture detection box, and the nickname box is a nickname detection box.
(2) Relative locations between an upper boundary of the nickname box and an upper boundary of the profile picture box are as follows: coordinates $text_{up}$ of the upper boundary of the nickname box are within [$head_{up}$ + a * head_h, $head_{up}$ + b * head_h]. For example, a=-0.25, and b=0.5.
(3) Relative locations between a lower boundary of the nickname box and the upper boundary of the profile picture box are as follows: coordinates $text_{bottom}$ of the lower boundary of the nickname box are within [$head_{up}$ + c * head_h, $head_{up}$ + d * head_h]. For example, c=0.25 and d=0.75.

Thirdly, in a case of a profile picture on the left side of the chat interface screenshot, a nickname region corresponding to a text box (that is, a text region) is considered as satisfying the following conditions at the same time.

$$\begin{cases} |text_{left} - (\text{head}_{left} + head\_w)| < l_{\min} \\ text_{up} > head_{up} + a * head\_h \\ text_{up} < head_{up} + b * head\_h \\ text_{bottom} > head_{up} + c * head\_h \\ text_{bottom} < head_{up} + d * head\_h \end{cases}$$

Similarly, in a case of a profile picture on the right side of the screenshot of the chat interface, a nickname region corresponding to a text box (that is, a text region) is considered as satisfying the following conditions at the same time.

$$\begin{cases} (head_{left} + head\_w)| < l\_\min \\ text_{up} > head_{up} + a * head\_h \\ text_{up} < head_{up} + b * head\_h \\ text_{bottom} > head_{up} + c * head\_h \\ text_{bottom} < head_{up} + d * head\_h \end{cases}$$

It should be noted that in a case of each profile picture, if a plurality of text boxes satisfy the conditions, a text box closest to the text box is selected as a corresponding nickname location. After filtration in this step, each profile picture corresponds to at most one nickname box corresponding to the text box.

In an optional embodiment, after the profile picture region set is obtained, in a case of a plurality of profile picture boxes belonging to a same contact, left-right abscissas, and ordinates of nickname boxes corresponding to the profile picture boxes are aligned.

Specifically, nick1 is marked as a nickname of head1 (profile picture 1), nick2 is a nickname of head2 (profile picture 2), (left, up) are coordinates of the upper left corner of the nickname box, and (right, bottom) are coordinates of the lower right corner of the nickname box. Thus, an alignment result is required to be shown in a formula as follows:

$$\begin{cases} nick1_{left} = nick2_{left}, \\ nick1_{right} = nick2_{right}, \\ nick1_{up} - head1_{up} = nick2_{up} - head2_{up}, \\ nick1_{bottom} - head1_{up} = nick2_{bottom} - head2_{up}. \end{cases}$$

It should be noted that when nickname boxes are aligned, if it is determined that an undetected nickname region exists, completion is performed correspondingly. After the alignment operation, detection accuracy and recall of the nickname region can be significantly improved.

In an optional embodiment, in step 103 mentioned above, a private region is determined based on the target region, which includes:

a candidate region is selected from the at least one text region within the target region, where the candidate region is a text region located above a boundary line of the first image;
based on a vertical center line of the first image and historical information of an application to which the first image belongs, a chat group name region is determined from the candidate region; and
the chat group name region is determined as a group name portion in the private region.

During particular implementation, when the first image is a chat interface screenshot, based on a type of an application to which the first image belongs, historical information of the application can be obtained. Based on the historical information of the application, a target boundary line is obtained. For example, as shown in FIG. 9, in a case of existing chat software, after a plurality of profile picture regions within the first image are obtained, a target profile picture region at a top within the first image may be selected from the plurality of profile picture regions. A straight line on which an upper boundary of the target profile picture region is located is taken as a target boundary line a.

Further, the chat group name region is generally located at a left location and a middle location of the chat interface. Thus, whether the group name is at the middle location or the left location may be determined based on historical information of an application. Further, the chat group name region is determined from the candidate region based on the vertical center line of the first image and historical information of an application to which the first image belongs. For example, if the group name is located at the middle location, a text region covering coordinates of the vertical center line is selected from the candidate region as a candidate group name. If the group name is located at the left location, a text region covering 1/4 a width of a screenshot is selected from the candidate region as a candidate group name. Finally, it can be known based on collected historical information that a font of the group name is larger than a font of other information (such as time) in the top region. Thus, a text region having a largest text box height may be selected from the group name candidates as the chat group name region.

In an optional embodiment, the above image processing method further includes:

when the first image is obtained, a name of an application to which the first image belongs is obtained correspondingly; and
the name of the application is written into attribute information of the first image.

During particular implementation, when the first image is obtained, a name of an application to which the chat interface belongs is obtained at the same time, and the name of the application is written into the attribute information of the first image. In this way, the name of the application can be obtained based on the attribute information of the first image, and the historical information of the application can be obtained.

In an optional embodiment, before a target region within the first image is detected, the method further includes:

a picture type of the first image is determined based on the attribute information of the first image, where the picture type includes a single-screen image style, a double-screen image style, and a long image style; and
when it is determined that the picture style of the first image is the double-screen image style or the long image style, the first image is processed into the single-screen image style.

For example, when the first image is a chat interface screenshot, different applications present different styles. For example, in some chat interfaces, a single screen is directly tiled to double screens; and in some chat interfaces, a chat list or an address list is displayed on a left screen, and the chat interface is displayed on a right screen. Thus, in a case of the first image in the double-screen image style, during cropping, a cropping method may be determined based on the type of the application.

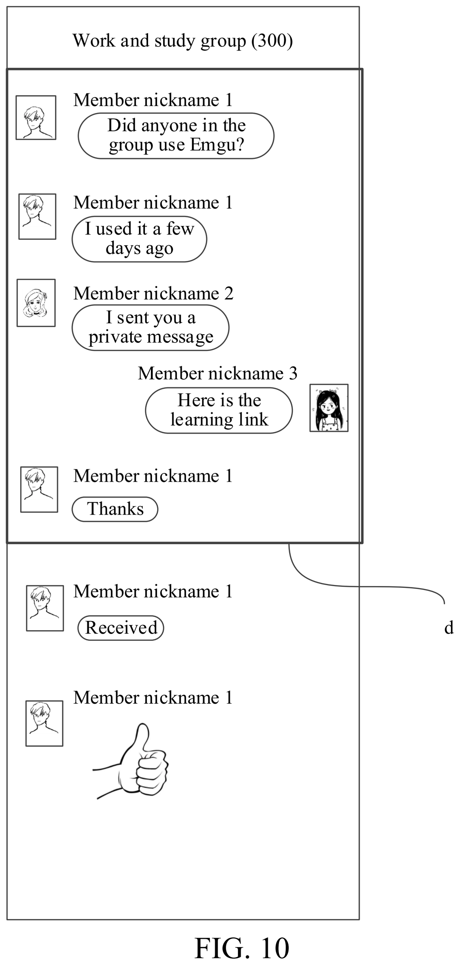

For example, in a case of the first image in the long image style, as shown in FIG. 10, a single-screen picture may be extracted through sliding from the first image through a vertically sliding window d having a step length of 200 and a height of 1000. That is, an image region in each vertically sliding window d is taken as one single-screen picture. In this way, one first image in the long image style may be processed into a plurality of single-screen pictures.

For example, in a case of a long picture in a widescreen, a cropping logic of a double-screen image is first executed. Then, a cropping logic of a vertical sliding window is performed on a cropping result. After such processing, the inputted first image may be processed into a plurality of single-screen pictures.

During particular implementation, a type of an application may be determined based on attribute information of a first image. Based on the type of the application, whether the first image is cropped is determined. If the first image is not cropped, a value of multi_window is marked as false. If the first image having a left-screen region and a right-screen region is required to be cropped based on a middle line, a value of multi_window is marked as true.

In the above embodiment, before the first image is inputted into the network model, the first image is processed into a single-screen image style such that a better detection effect can be obtained.

An entity executing the image processing method provided in an embodiment of the present disclosure may be an image processing apparatus. In an embodiment of the present disclosure, with an example in which an image processing apparatus performs An image processing method, the image processing apparatus provided in an embodiment of the present disclosure is described.

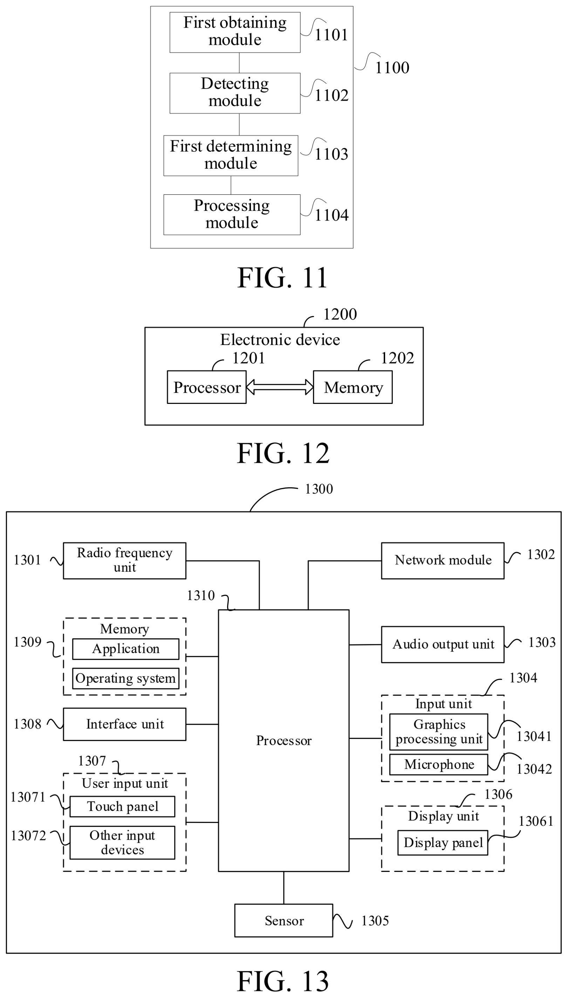

With reference to FIG. 11, an embodiment of the present disclosure provides an apparatus 1100 for processing an image. The apparatus includes:

a first obtaining module 1101 configured to acquire a first image;
a detecting module 1102 configured to detect a target region within the first image, where the target region includes at least one text region and at least one image region;
a first determining module 1103 configured to determine a private region based on the target region; and
a processing module 1104 configured to perform privacy processing on the private region, and obtain a processed second image.

Optionally, the detecting module 1102 includes:

a first detecting submodule configured to extract feature maps from a top layer, a middle layer, and a bottom layer of the first image by using a backbone network of a network model;
a second detecting submodule configured to perform concatenation on the feature maps by using a feature fusion network of the network model, and obtain an enhanced feature map; and
a third detecting submodule configured to input the enhanced feature map into a head prediction network of the network model, and acquire the target region, where the head prediction network includes two types of detection heads, one type of detection head is configured to predict the at least one image region, the other type of detection head is configured to predict the at least one text region, and a detection box outputted by each detection head includes three pieces of feature information as follows: a category of the detection box being a text or an image, a location of the detection box, and a confidence level of the detection box.

Optionally, the feature fusion network includes an FPN structure and a PAN structure that are sequentially connected. A cross stage partial network CspNet in the FPN structure and a cross stage partial network in the PAN structure are replaced with multibranch blocks each having three convolution kernels of different sizes.

The second detecting submodule is specifically configured to:

input the feature map of the top layer extracted by the backbone network into a convolutional block layer (CBL) 1 of the FPN structure, input the feature map of the middle layer extracted by the backbone network into a multibranch block 1 of the FPN structure, and take output of the multibranch block 1 as input of a CBL 2;

upsample a feature map outputted by the CBL 1, perform concatenation on the feature map, the feature map extracted by the backbone network from the bottom layer, and a feature map outputted by the CBL 2, and take a feature map after the concatenation as input of a multibranch block 2 in the PAN structure;

take output of the multibranch block 2 as input of a CBL 3 in the PAN structure, take output of the CBL 2 as input of a multibranch block 3 in the PAN structure, and take output of the multibranch block 3 as input of a CBL 4 in the PAN structure; and

downsample a feature map outputted by the CBL 3, perform concatenation on the feature map, the feature map of the top layer extracted by the backbone network, and a feature map outputted by the CBL 4, take the feature map after the concatenation as input of a multibranch block 4, and output the enhanced feature map by using the multibranch block 4.

Optionally, the apparatus 1100 is further configured to:

constrain, when the network model is trained, a location of a detection box of a text by using a TIoU loss function.

A computation formula for the TIoU loss function is as follows:

$$TIoU = ln\frac{inter(char_{pred}, char_{gt})}{union(char_{pred}, char_{gt})}.$$

Specifically, inter refers to computation of an intersection set, union refers to computation of a union set, char_pred refers a character of a predicated text box subjected to OCR detection, and har_gt refers to a character of a true value box subjected to OCR detection.

Optionally, the first determining module 1103 includes:

a first determining submodule configured to divide, based on a vertical center line of the first image, the at least one image region within the target region into a first set located to a left side of the vertical center line and a second set located to a right side of the vertical center line;

a second determining submodule configured to determine, based on an abscissa of the image region in the first set, a first set of profile picture regions located to the left side from the first set;

a third determining submodule configured to determine, based on an abscissa of the image region in the second set, a second set of profile picture regions located to the right side from the second set; and

a fourth determining submodule configured to determine the private region based on the first set of profile picture regions and the second set of profile picture regions.

Optionally, the fourth determining submodule includes:

a first determining unit configured to perform sliding by using a sliding window within a target vertical region of the first image based on a predetermined step length, and acquire N pixels within the sliding window, where N is a positive integer, the target vertical region corresponding to the first set of profile picture regions is a first vertical region located to the left side, and the target vertical region corresponding to the second set of profile picture regions is a second vertical region located to the right side;

a second determining unit configured to determine, based on three-channel color differences between the N pixels and corresponding pixels in a first region, whether an image within the sliding window matches the first region, where the first region is any profile picture region in the first set of profile picture regions and the second set of profile picture regions;

a third determining unit configured to traverse, when the image within the sliding window matches the first region, profile picture regions of the first set of profile picture regions and the second set of profile picture regions, and determine intersection over union between each profile picture region and the image region within the sliding window; and

a fourth determining unit configured to determine, when intersection over union between a profile picture region and the image region within the sliding window being less than a second predetermined value exists in the first set of profile picture regions and the second set of profile picture regions, the image region within the sliding window, the first set of profile picture regions, and the second set of profile picture regions as a user profile picture portion in the private region.

Optionally, the apparatus further includes:

a fifth determining unit configured to determine, based on a location relationship between a user profile picture region and a nickname area of a chat group member, the nickname area of the chat group member from the at least one text region within the target region; and
a sixth determining unit configured to determine the nickname area of the chat group member as a nickname portion in the private region.

Optionally, the first determining module 1103 includes:

a fifth determining submodule configured to select a candidate region from the at least one text region within the target region, where the candidate region is a text region located above a boundary line of the first image;
a sixth determining submodule configured to determine, based on a vertical center line of the first image and historical information of an application to which the first image belongs, a chat group name region from the candidate region; and
a seventh determining submodule configured to determine the chat group name region as a group name portion in the private region.

Optionally, the apparatus 1100 further includes:

a second obtaining module configured to acquire, when the first image is obtained, a name of an application to which the first image belongs correspondingly; and
a third obtaining module configured to write the name of the application into attribute information of the first image.

Optionally, the apparatus 1100 includes:

a second determining module configured to determine a picture type of the first image based on the attribute information of the first image, where the picture type includes a single-screen image style, a double-screen image style, and a long image style; and
a third determining module configured to process, when it is determined that the picture style of the first image is the double-screen image style or the long image style, the picture style of the first image into the single-screen image style.

In an embodiment of the present disclosure, a first image is obtained; a target region within the first image is detected, where the target region includes at least one text region and at least one image region; a private region is determined based on the target region; and privacy processing is performed on the private region, and a processed second image is obtained. In this way, private information can be hidden through a one-click/one-tap operation for a user, time of the operation by the user is saved, and the operation by the user is convenient.

The image processing apparatus in an embodiment of the present disclosure may be an electronic device, or may be a component in the electronic device, such as an integrated circuit or a chip. The electronic device may be a terminal or another device other than the terminal. For example, the electronic device may be a mobile phone, a tablet computer, a notebook computer, a palm computer, an in-vehicle electronic device, a mobile internet device (Mobile Internet Device, MID), an enhanced reality (enhanced reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), etc., and may alternatively be a server, a network attached storage (Network Attached Storage, NAS), a personal computer (personal computer, PC), a television (television, TV), a teller machine, or a self-service machine, etc. This is not specifically limited in an embodiment of the present disclosure.

The image processing apparatus in an embodiment of the present disclosure may be an apparatus having an operating system. The operating system may be an Android (Android) operating system, an ios operating system, or another possible operating system. This is not specifically limited in an embodiment of the present disclosure.

The image processing apparatus provided in an embodiment of the present disclosure can implement the processes implemented in the method embodiments of FIG. 1 to FIG. 10. To avoid repetition, details are not described herein.

Optionally, as shown in FIG. 12, an embodiment of the present disclosure further provides an electronic device 1200. The electronic device includes a processor 1201 and a memory 1202. The memory 1202 stores a program or an instruction capable of being run on the processor 1201. The program or the instruction, when executed by the processor 1201, implements steps in the above embodiments of the image processing method, and can achieve the same technical effects. To avoid repetition, details are not described herein.

It should be noted that the electronic device in an embodiment of the present disclosure includes the above mobile electronic device and the above non-mobile electronic device.

FIG. 13 is a schematic diagram of a hardware structure of an electronic device for implementing an embodiment of the present disclosure.

The electronic device 1300 includes but is not limited to components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art can understand that the electronic device 1300 may further include a power supply (such as a battery) for supplying power to the components. The power supply may be logically connected to the processor 1310 by using a power management system, such that functions, such as charging, discharging, and power consumption management are implemented by using the power management system. The structure of the electronic device shown in FIG. 13 constitutes no limitation on the electronic device. The electronic device may include more or fewer components than those shown in the figure, some components may be combined, or a different component deployment may be provided. This is not repeated herein.

The processor 1310 is configured to acquire a first image; detect a target region within the first image, where the target region includes at least one text region and at least one image region; determine a private region based on the target region; and perform privacy processing on the private region, and obtain a processed second image.

Optionally, the processor 1310 is specifically configured to extract feature maps from a top layer, a middle layer, and a bottom layer of the first image by using a backbone network of a network model; perform concatenation on the feature maps by using a feature fusion network of the network model, and obtain an enhanced feature map; and input the enhanced feature map into a head prediction network of the network model, and acquire the target region, where the head prediction network includes two types of detection heads, one type of detection head is configured to predict the at least one image region, the other type of detection head is configured to predict the at least one text region, and a detection box outputted by each detection head includes three pieces of feature information as follows: a category of the detection box being a text or an image, a location of the detection box, and a confidence level of the detection box.

Optionally, the feature fusion network includes an FPN structure and a PAN structure that are sequentially connected. A cross stage partial network CspNet in the FPN structure and a cross stage partial network in the PAN structure are replaced with multibranch blocks each having three convolution kernels of different sizes. The processor 1310 is specifically configured to:

input the feature map of the top layer extracted by the backbone network into a convolutional block layer (CBL) 1 of the FPN structure, input the feature map of the middle layer extracted by the backbone network into a multibranch block 1 of the FPN structure, and take output of the multibranch block 1 as input of a CBL 2;

upsample a feature map outputted by the CBL 1, perform concatenation on the feature map, the feature map extracted by the backbone network from the bottom layer, and a feature map outputted by the CBL 2, and take a feature map after the concatenation as input of a multibranch block 2 in the PAN structure;

take output of the multibranch block 2 as input of a CBL 3 in the PAN structure, take output of the CBL 2 as input of a multibranch block 3 in the PAN structure, and take output of the multibranch block 3 as input of a CBL 4 in the PAN structure; and

downsample a feature map outputted by the CBL 3, perform concatenation on the feature map, the feature map of the top layer extracted by the backbone network, and a feature map outputted by the CBL 4, take the feature map after the concatenation as input of a multibranch block 4, and output the enhanced feature map by using the multibranch block 4.

Optionally, the processor 1310 is specifically configured to:

divide, based on a vertical center line of the first image, the at least one image region within the target region into a first set located to a left side of the vertical center line and a second set located to a right side of the vertical center line;

determine, based on an abscissa of the image region in the first set, a first set of profile picture regions located to the left side from the first set;

determine, based on an abscissa of the image region in the second set, a second set of profile picture regions located to the right side from the second set; and

determine the private region based on the first set of profile picture regions and the second set of profile picture regions.

Optionally, the processor 1310 is specifically configured to:

perform sliding by using a sliding window within a target vertical region of the first image based on a predetermined step length, and acquire N pixels within the sliding window, where N is a positive integer, the target vertical region corresponding to the first set of profile picture regions is a first vertical region located to the left side, and the target vertical region corresponding to the second set of profile picture regions is a second vertical region located to the right side;

determine, based on three-channel color differences between the N pixels and corresponding pixels in a first region, whether an image within the sliding window matches the first region, where the first region is any profile picture region in the first set of profile picture regions and the second set of profile picture regions;

traverse, when the image within the sliding window matches the first region, profile picture regions of the first set of profile picture regions and the second set of profile picture regions, and determine intersection over union between each profile picture region and the image region within the sliding window; and

determine, when intersection over union between a profile picture region and the image region within the sliding window being less than a second predetermined value exists in the first set of profile picture regions and the second set of profile picture regions, the image region within the sliding window, the first set of profile picture regions, and the second set of profile picture regions as a user profile picture portion in the private region.

Optionally, the processor 1310 is further configured to:

determine, based on a location relationship between a user profile picture region and a nickname area of a chat group member, the nickname area of the chat group member from the at least one text region within the target region; and

determine, the nickname area of the chat group member as a nickname portion in the private region.

Optionally, the processor 1310 is specifically configured to:

select a candidate region from the at least one text region within the target region, where the candidate region is a text region located above a boundary line of the first image;

determine, based on a vertical center line of the first image and historical information of an application to which the first image belongs, a chat group name region from the candidate region; and

determine the chat group name region as a group name portion in the private region.

Optionally, the processor 1310 is specifically configured to:

acquire, when the first image is obtained, a name of an application to which the first image belongs correspondingly; and

write the name of the application into attribute information of the first image.

Optionally, the processor 1310 is further configured to:

determine a picture type of the first image based on the attribute information of the first image, where the picture type includes a single-screen image style, a double-screen image style, and a long image style; and

process, when it is determined that the picture style of the first image is the double-screen image style or the long image style, the picture style of the first image into the single-screen image style.

In embodiments of the present disclosure, an electronic device acquires a first image; detects a target region within the first image, where the target region includes at least one text region and at least one image region; determines a private region based on the target region; and performs privacy processing on the private region, and obtains a processed second image. In this way, private information can be hidden through a one-click/one-tap operation for a user, time of the operation by the user is saved, and the operation by the user is convenient.

It should be understood that in an embodiment of the present disclosure, an input unit 1304 may include a graphics processing unit (Graphics Processing Unit, GPU) 13041 and a microphone 13042. The graphics processing unit 13041 processes image data of a static picture or a video that is obtained by an image capture apparatus (such as a camera) in a video capture mode or an image capture mode. The display unit 1306 may include a display panel 13061. The display panel 13061 may be configured by using a liquid crystal display, an organic light-emitting diode, etc. The user input unit 1307 includes a touch panel 13071 and at least another type of input device 13072. The touch panel 13071 is also referred to as a touchscreen. The touch panel 13071 may include a touch detection apparatus and a touch controller. The other input devices 13072 may include but are not limited to a physical keyboard, a functional key (such as a volume control key or a switch key), a track ball, a mouse, and a joystick. This is not repeated herein.

The memory 1309 may be configured to store a software program and various data. The memory 1309 may mainly include a first storage region for storing a program or an instruction and a second storage region for storing data. The first storage region may store an operating system, an application or an instruction required for at least one function (such as a sound playback function and an image playback function), etc. In addition, the memory 1309 may include a volatile memory or a non-volatile memory, or the memory 1309 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1309 in an embodiment of the present disclosure includes but is not limited to these and any other suitable types of memories.

The processor 1310 may include one or more processing units. Optionally, the processor 1310 integrates an application processor and a modem processor. The application processor mainly processes operations related to an operating system, a user interface, an application, etc. The modem processor mainly processes wireless communication signals, and is a baseband processor for example. It can be understood that the above modem processor may not be integrated into the processor 1310.

An embodiment of the present disclosure further provides a readable storage medium. The readable storage medium stores a program or an instruction. The program or an instruction, when executed by a processor, implements all processes of the above embodiments of the image processing method, and can achieve the same technical effects. To avoid repetition, details are not described herein.

The processor is a processor in the electronic device of the above embodiment. The readable storage medium includes a computer-readable storage medium, such as a computer read-only memory ROM, a random access memory RAM, a magnetic disk, or an optical disk.

An embodiment of the present disclosure further provides a chip. The chip includes a processor and a communication interface. The communication interface is coupled to the processor. The processor is configured to execute a program or an instruction, to implement all processes of the above embodiments of the image processing method, and can achieve the same technical effects. To avoid repetition, details are not described herein.

It should be understood that the chip mentioned in an embodiment of the present disclosure may alternatively be referred to as a system on a chip.

An embodiment of the present disclosure provides a computer program product. The program product is stored in a storage medium. The program product, when executed by at least one processor, implements all processes of the above embodiments of the image processing method, and can achieve the same technical effects. To avoid repetition, details are not described herein.

It should be noted that the terms "comprise", "include", or their any other variations herein is intended to cover a non-exclusive inclusion, such that a process, method, article, or apparatus including a series of elements not only includes those elements, but also includes other elements that are not explicitly listed, or further includes inherent elements of such a process, method, article, or apparatus. In a case of no more limitations, an element limited by phrases "comprising a..." and "including a..." does not exclude other same elements in a process, method, article, or apparatus including the element. In addition, it should be noted that the scope of the method and the scope of the apparatus in implementations of the present disclosure are not limited to execute functions in the sequences shown or discussed, but may alternatively execute functions substantially simultaneously or in a reverse sequence of the functions involved. For example, the described method may be executed in a sequence different from that described, and various steps may be added, omitted, or combined. In addition, features described with reference to some examples may be combined in other examples.

Through the descriptions of the above implementations, a person skilled in the art can clearly learn that the methods in the above embodiments may be implemented by using software plus a necessary general-purpose hardware platform, and certainly may be implemented by using hardware. In many cases, the former is the better implementation. Based on such an understanding, the technical solutions of the present disclosure essentially or the portion contributing to the prior art may be implemented in a form of a computer software product. The computer software product is stored in a storage medium (such as a ROM/RAM, a magnetic disk, or an optical disc) and includes several instructions for causing a terminal (which may be a mobile phone, a computer, a server, or a network device, etc.) to perform the methods described in the embodiments of the present disclosure.

The embodiments of the present disclosure are described above in combination with accompanying drawings. However, the present disclosure is not limited to the above particular implementations. The above particular implementations are merely illustrative and not limitative. A person of ordinary skill in the art can further make various variations under the inspiration of the present disclosure without departing from the spirit of the present disclosure and the scope of protection of the claims. Such variations all fall within the scope of protection of the present disclosure.

**Claims**

1. An image processing method, comprising:

   obtaining a first image;
   detecting a target region within the first image, wherein the target region comprises at least one text region and at least one image region;
   determining a private region based on the target region; and
   performing privacy processing on the private region, and obtaining a processed second image.

2. The image processing method according to claim 1, where the detecting a target region within the first image comprises:

   extracting feature maps from a top layer, a middle layer, and a bottom layer of the first image by using a backbone network of a network model;
   performing concatenation on the feature maps by using a feature fusion network of the network model, and obtaining an enhanced feature map; and
   inputting the enhanced feature map into a head prediction network of the network model, and obtaining the target region, wherein the head prediction network comprises two types of detection heads, one type of detection head is configured to predict the at least one image region, the other type of detection head is configured to predict the at least one text region, and a detection box outputted by each detection head comprises three pieces of feature information as follows: a category of the detection box being a text or an image, a location of the detection box, and a confidence level of the detection box.

3. The image processing method according to claim 2, wherein the feature fusion network comprises an FPN structure and a PAN structure that are sequentially connected; and a cross stage partial network CspNet in the FPN structure and a cross stage partial network in the PAN structure are replaced with multibranch blocks, and each multibranch block comprises three convolution kernels of different sizes; and
   the performing concatenation on the feature maps by using a feature fusion network of the network model, and obtaining an enhanced feature map comprise:

   inputting the feature map of the top layer extracted by the backbone network into a convolutional block layer (CBL) 1 of the FPN structure, inputting the feature map of the middle layer extracted by the backbone network into a multibranch block 1 of the FPN structure, and taking output of the multibranch block 1 as input of a convolutional block layer (CBL) 2;
   upsampling a feature map outputted by the convolutional block layer (CBL) 1, performing concatenation on the feature map, the feature map extracted by the backbone network from the bottom layer, and a feature map outputted by the convolutional block layer (CBL) 2, and taking a feature map after the concatenation as input of a multibranch block 2 in the PAN structure;
   taking output of the multibranch block 2 as input of a convolutional block layer (CBL) 3 in the PAN structure, taking output of the convolutional block layer (CBL) 2 as input of the multibranch block 3 in the PAN structure, and taking output of the multibranch block 3 as input of a convolutional block layer (CBL) 4 in the PAN structure; and
   downsampling a feature map outputted by the convolutional block layer (CBL) 3, performing concatenation on the feature map, the feature map of the top layer extracted by the backbone network, and a feature map outputted by the convolutional block layer (CBL) 4, taking the feature map after the concatenation as input of a multibranch block 4, and outputting the enhanced feature map by using the multibranch block 4.

4. The image processing method according to claim 1, wherein the determining a private region based on the target region comprises:

   dividing, based on a vertical center line of the first image, the at least one image region within the target region into a first set located to a left side of the vertical center line and a second set located to a right side of the vertical center line;
   determining, based on an abscissa of the image region in the first set, a first set of profile picture regions located to the left side from the first set;

determining, based on an abscissa of the image region in the second set, a second set of profile picture regions located to the right side from the second set; and

determining the private region based on the first set of profile picture regions and the second set of profile picture regions.

5. The image processing method according to claim 4, wherein the determining the private region based on the first set of profile picture regions and the second set of profile picture regions comprises:

performing sliding by using a sliding window within a target vertical region of the first image based on a predetermined step length, and obtaining N pixels within the sliding window, wherein N is a positive integer, the target vertical region corresponding to the first set of profile picture regions is a first vertical region located to the left side, and the target vertical region corresponding to the second set of profile picture regions is a second vertical region located to the right side;

determining, based on three-channel color differences between the N pixels and corresponding pixels in a first region, whether an image within the sliding window matches the first region, wherein the first region is any profile picture region in the first set of profile picture regions and the second set of profile picture regions;

traversing, when the image within the sliding window matches the first region, profile picture regions of the first set of profile picture regions and the second set of profile picture regions, and determining intersection over union between each profile picture region and the image region within the sliding window; and

determining, when intersection over union between a profile picture region and the image region within the sliding window being less than a second predetermined value exists in the first set of profile picture regions and the second set of profile picture regions, the image region within the sliding window, the first set of profile picture regions, and the second set of profile picture regions as a user profile picture portion in the private region.

6. The image processing method according to claim 5, wherein after the determining the image region within the sliding window, the first set of profile picture regions, and the second set of profile picture regions as a user profile picture portion in the private region, the method further comprises:

determining, based on a location relationship between a user profile picture region and a nickname area of a chat group member, the nickname area of the chat group member from the at least one text region within the target region; and

determining the nickname area of the chat group member as a nickname portion in the private region.

7. The image processing method according to claim 1, wherein the determining a private region based on the target region comprises:

selecting a candidate region from the at least one text region within the target region, wherein the candidate region is a text region located above a boundary line of the first image;

determining, based on a vertical center line of the first image and historical information of an application to which the first image belongs, a chat group name region from the candidate region; and

determining the chat group name region as a group name portion in the private region.

8. The image processing method according to claim 1, further comprising:

obtaining, when the first image is obtained, a name of an application to which the first image belongs correspondingly; and

writing the name of the application into attribute information of the first image.

9. The image processing method according to claim 8, wherein before the detecting a target region within the first image, the method further comprises:

determining a picture type of the first image based on the attribute information of the first image, wherein the picture type comprises a single-screen image style, a double-screen image style, and a long image style; and

processing, when it is determined that the picture style of the first image is the double-screen image style or the long image style, the picture type of the picture style of the first image into the single-screen image style.

10. An image processing apparatus, comprising:

a first obtaining module configured to acquire a first image;
a detecting module configured to detect a target region within the first image, wherein the target region comprises at least one text region and at least one image region;
a first determining module configured to determine a private region based on the target region; and
a processing module configured to perform privacy processing on the private region, and obtain a processed second image.

11. The image processing apparatus according to claim 10, wherein the detecting module comprises:

a first detecting submodule configured to extract feature maps from a top layer, a middle layer, and a bottom layer of the first image by using a backbone network of a network model;
a second detecting submodule configured to perform concatenation on the feature maps by using a feature fusion network of the network model, and obtain an enhanced feature map; and
a third detecting submodule configured to input the enhanced feature map into a head prediction network of the network model, and acquire the target region, wherein the head prediction network comprises two types of detection heads, one type of detection head is configured to predict the at least one image region, the other type of detection head is configured to predict the at least one text region, and a detection box outputted by each detection head comprises three pieces of feature information as follows: a category of the detection box being a text or an image, a location of the detection box, and a confidence level of the detection box.

12. The image processing apparatus according to claim 11, wherein the feature fusion network comprises an FPN structure and a PAN structure that are sequentially connected; a cross stage partial network CspNet in the FPN structure and a cross stage partial network in the PAN structure are replaced with multibranch blocks each having three convolution kernels of different sizes; and
the second detecting submodule is specifically configured to:

input the feature map of the top layer extracted by the backbone network into a convolutional block layer (CBL) 1 of the FPN structure, input the feature map of the middle layer extracted by the backbone network into a multibranch block 1 of the FPN structure, and take output of the multibranch block 1 as input of a convolutional block layer (CBL) 2;
upsample a feature map outputted by the convolutional block layer (CBL) 1, perform concatenation on the feature map, the feature map extracted by the backbone network from the bottom layer, and a feature map outputted by the convolutional block layer (CBL) 2, and take a feature map after the concatenation as input of a multibranch block 2 in the PAN structure;
take output of the multibranch block 2 as input of a convolutional block layer (CBL) 3 in the PAN structure, take output of the convolutional block layer (CBL) 2 as input of the multibranch block 3 in the PAN structure, and take output of the multibranch block 3 as input of a convolutional block layer (CBL) 4 in the PAN structure; and
downsample a feature map outputted by the convolutional block layer (CBL) 3, perform concatenation on the feature map, the feature map of the top layer extracted by the backbone network, and a feature map outputted by the convolutional block layer (CBL) 4, take the feature map after the concatenation as input of a multibranch block 4, and output the enhanced feature map by using the multibranch block 4.

13. The image processing apparatus according to claim 10, wherein the first determining module comprises:

a first determining submodule configured to divide, based on a vertical center line of the first image, the at least one image region within the target region into a first set located to a left side of the vertical center line and a second set located to a right side of the vertical center line;
a second determining submodule configured to determine, based on an abscissa of the image region in the first set, a first set of profile picture regions located to the left side from the first set;
a third determining submodule configured to determine, based on an abscissa of the image region in the second set, a second set of profile picture regions located to the right side from the second set; and
a fourth determining submodule configured to determine the private region based on the first set of profile picture regions and the second set of profile picture regions.

14. The image processing apparatus according to claim 13, wherein the fourth determining submodule comprises:

a first determining unit configured to perform sliding by using a sliding window within a target vertical region of the first image based on a predetermined step length, and acquire N pixels within the sliding window, wherein N is a positive integer, the target vertical region corresponding to the first set of profile picture regions is a first vertical region located to the left side, and the target vertical region corresponding to the second set of profile picture regions is a second vertical region located to the right side;

a second determining unit configured to determine, based on three-channel color differences between the N pixels and corresponding pixels in a first region, whether an image within the sliding window matches the first region, wherein the first region is any profile picture region in the first set of profile picture regions and the second set of profile picture regions;

a third determining unit configured to traverse, when the image within the sliding window matches the first region, profile picture regions of the first set of profile picture regions and the second set of profile picture regions, and determine intersection over union between each profile picture region and the image region within the sliding window; and

a fourth determining unit configured to determine, when intersection over union between a profile picture region and the image region within the sliding window being less than a second predetermined value exists in the first set of profile picture regions and the second set of profile picture regions, the image region within the sliding window, the first set of profile picture regions, and the second set of profile picture regions as a user profile picture portion in the private region.

15. The image processing apparatus according to claim 14, further comprising:

a fifth determining unit configured to determine, based on a location relationship between a user profile picture region and a nickname area of a chat group member, the nickname area of the chat group member from the at least one text region within the target region; and

a sixth determining unit configured to determine the nickname area of the chat group member as a nickname portion in the private region.

16. The image processing apparatus according to claim 10, wherein the first determining module comprises:

a fifth determining submodule configured to select a candidate region from the at least one text region within the target region, wherein the candidate region is a text region located above a boundary line of the first image;

a sixth determining submodule configured to determine, based on a vertical center line of the first image and historical information of an application to which the first image belongs, a chat group name region from the candidate region; and

a seventh determining submodule configured to determine the chat group name region as a group name portion in the private region.

17. The image processing apparatus according to claim 10, further comprising:

a second obtaining module configured to acquire, when the first image is obtained, a name of an application to which the first image belongs correspondingly; and

a third obtaining module configured to write the name of the application into attribute information of the first image.

18. The image processing apparatus according to claim 17, further comprising:

a second determining module configured to determine a picture type of the first image based on the attribute information of the first image, wherein the picture type comprises a single-screen image style, a double-screen image style, and a long image style; and

a third determining module configured to process, when it is determined that the picture style of the first image is the double-screen image style or the long image style, the picture style of the first image into the single-screen image style.

19. An electronic device, comprising a processor and a memory, wherein the memory stores a program or an instruction capable of being run on the processor, and the program or the instruction, when executed by the processor, implements steps of the image processing method according to any one of claims 1 to 9.

20. A readable storage medium, storing a program or an instruction, wherein the program or the instruction, when executed by a processor, implement steps of the image processing method according to any one of claims 1 to 9.

21. A chip, comprising a processor and a communication interface, wherein the communication interface is coupled to the processor, and the processor is configured to run a program or an instruction, to implement steps of the image processing method according to any one of claims 1 to 9.

22. A computer program product, wherein the computer program product is executed by at least one processor to implement steps of the image processing method according to any one of claims 1 to 9.

23. An electronic device, configured to perform steps of the image processing method according to any one of claims 1 to 9.

Start

Obtain a first image — 101

Detect a target region within the first image, where the target region includes at least one text region and at least one image region — 102

Determine a private region based on the target region — 103

Perform privacy processing on the private region, and obtain a processed second image — 104

End

## FIG. 1

FIG. 2

## FIG. 3

```
        ┌───────────┐
        │    Max    │
        │  pooling  │
  ┌──────┐        └───────────┐
  │ SPPF │ =      ┌───────────┐   ┌───────────────┬─────┐
  └──────┘        │    Max    │   │ Concatenation │ CBL │
        │  Pooling  │   └───────────────┴─────┘
        └───────────┐
        │    Max    │
        │  pooling  │
        └───────────┘
```

## FIG. 4

```
  ┌────────┐       ┌─────┐  ┌──────────┐  ┌────────────┐
  │ CSP1_x │ =  →  │ CBL │  │ X*Residual│  │ Convolution│
  └────────┘       └─────┘  │   unit   │  │   layer    │
                    └──────────┘  └────────────┘
                    ┌────────────┐
                    │ Convolution│
                    │   layer    │
                    └────────────┘
```

| Concatenation | Batch normalization | Rectified linear unit | Convolution layer |
|---|---|---|---|

## FIG. 5

```
  ┌──────────┐       ┌─────┐  ┌─────┐  ┌─────┐
  │ Residual │ =  →  │ CBL │  │ CBL │→ │ ADD │
  │   unit   │       └─────┘  └─────┘  └─────┘
  └──────────┘          └──────────────────┘
```

EP 4 723 060 A1

```
          ┌──────────┐      ┌──────────────┐      ┌──────────────┐      ┌──────────┐
 ─────┬──▶│   3x3    │─────▶│ Concatenation│─────▶│    Batch     │─────▶│   relu   │
      │   │Convolution│      │              │      │ normalization│      │          │
      │   └──────────┘      └──────────────┘      └──────────────┘      └──────────┘
      │   ┌──────────┐              ▲
      ├──▶│   1x3    │──────────────┤
      │   │Convolution│             │
      │   └──────────┘              │
      │   ┌──────────┐              │
      └──▶│   3x1    │──────────────┘
          │Convolution│
          └──────────┘
```

## FIG. 6

```
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
  ┌──────────┐    ┌──────────┐    ┌──────────┐
│ │   1x1    │─┬─▶│   3x3    │───▶│   1x1    │───▶ ▢  cls        │
  │convolution│ │ │convolution│    │convolution│
│ └──────────┘ │ └──────────┘    └──────────┘                  │
              │ ┌──────────┐    ┌──────────┐
│             └▶│   3x3    │─┬─▶│   1x1    │───▶ ▢  reg         │
                │convolution│ │ │convolution│
│               └──────────┘ │ └──────────┘                    │
                            │ ┌──────────┐
│                           └▶│   1x1    │───▶ ▢  conf         │
                              │convolution│
│                             └──────────┘                      │
  Detection head 1
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
```

## FIG. 7

```
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
  ┌──────────┐   ┌──────────────┐           ┌──────────┐
│ │   1x1    │─┬▶│1x5 convolution│─┐ ⊕ ┌───▶│   1x1    │──▶ ▢ cls│
  │convolution│ │ ├──────────────┤ │       │convolution│
│ └──────────┘ ├▶│1x3 convolution│─┘       └──────────┘        │
              │ ├──────────────┤           ┌──────────┐
│             ├▶│1x5 convolution│─┐ ⊕ ┌───▶│   1x1    │──▶ ▢ reg│
                ├──────────────┤ │       │convolution│
│             └▶│1x3 convolution│─┘       └──────────┘        │
                └──────────────┘           ┌──────────┐
│                                     └───▶│   1x1    │──▶ ▢ conf│
                                          │convolution│
│                                          └──────────┘          │
  Detection head 2
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
```

## FIG. 8

Work and study group (300)                                    a

Member nickname 1

Did anyone in the group
use Emgu?                                                     b2

Member nickname 1

I used it a few
days ago

Member nickname 2

I sent you a
private message

Member nickname 3

Here is the learning link

c

Member nickname 1

Thanks

b1

FIG. 9

Work and study group (300)

Member nickname 1

Did anyone in the group use Emgu?

Member nickname 1

I used it a few days ago

Member nickname 2

I sent you a private message

Member nickname 3

Here is the learning link

Member nickname 1

Thanks

Member nickname 1

Received

d

Member nickname 1

FIG. 10

First obtaining
module / 1101

Detecting
module / 1102

/ 1100

First determining
module / 1103

Processing
module / 1104

## FIG. 11

/ 1200

Electronic device

/ 1201

Processor ⟺ Memory

/ 1202

## FIG. 12

/ 1300

1301 — Radio frequency
unit

Network module / 1302

1310 /

1309 — Memory
Application
Operating system

Audio output unit / 1303

/ 1304

Input unit

Graphics
processing unit / 13041

Microphone / 13042

1308 — Interface unit

Processor

1307 /

13071 — User input unit
Touch panel

13072 — Other input
devices

/ 1306

Display unit

Display panel / 13061

Sensor / 1305

## FIG. 13

## INTERNATIONAL SEARCH REPORT

| International application No. |
| --- |
| **PCT/CN2024/094279** |

### A. CLASSIFICATION OF SUBJECT MATTER

G06T 3/00(2024.01)i

According to International Patent Classification (IPC) or to both national classification and IPC

### B. FIELDS SEARCHED

Minimum documentation searched (classification system followed by classification symbols)

IPC: G06T; G06K; G06V

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 百度, BAIDU; IEEE: 隐私, 私密, 敏感, 头像, 人脸, 昵称, 群名, 电话号码, 识别, 检测, 图像, 文本, 隐藏, 马赛克, 主干, 骨干, 颈部, 头部, 特征融合, 多分支, privacy, sensitive, head portrait, face, nickname, group name, telephone number, recognize, detect, image, text, hide, mosaic, backbone, neck, head, feature fusion, multiple branch

### C. DOCUMENTS CONSIDERED TO BE RELEVANT

| Category* | Citation of document, with indication, where appropriate, of the relevant passages | Relevant to claim No. |
| --- | --- | --- |
| PX | CN 116703705 A (VIVO COMMUNICATION TECHNOLOGY CO., LTD.) 05 September 2023 (2023-09-05)<br>description, paragraphs 2-241 | 1-23 |
| X | CN 108629200 A (QINGDAO HISENCE MOBILE COMMUNICATIONS TECHNOLOGY CO., LTD.) 09 October 2018 (2018-10-09)<br>description, paragraphs 72-201 | 1, 4, 7-10, 13, 16-23 |
| Y | CN 108629200 A (QINGDAO HISENCE MOBILE COMMUNICATIONS TECHNOLOGY CO., LTD.) 09 October 2018 (2018-10-09)<br>description, paragraphs 72-201 | 2, 11, 19-23 |
| Y | CN 115170819 A (BEIJING BAIDU NETCOM SCIENCE AND TECHNOLOGY CO., LTD.) 11 October 2022 (2022-10-11)<br>description, paragraphs 4-72 | 2, 11, 19-23 |

☑ Further documents are listed in the continuation of Box C.   ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **25 August 2024** | **28 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/094279**

### C. DOCUMENTS CONSIDERED TO BE RELEVANT

| Category* | Citation of document, with indication, where appropriate, of the relevant passages | Relevant to claim No. |
|---|---|---|
| X | CN 110262735 A (SHENZHEN TRANSSION HOLDINGS CO., LTD.) 20 September 2019 (2019-09-20) <br> description, paragraphs 41-133 | 1, 4, 7-10, 13, 16-23 |
| Y | CN 110262735 A (SHENZHEN TRANSSION HOLDINGS CO., LTD.) 20 September 2019 (2019-09-20) <br> description, paragraphs 41-133 | 2, 11, 19-23 |
| A | US 2023141541 A1 (NEC CORP.) 11 May 2023 (2023-05-11) <br> entire document | 1-23 |

Form PCT/ISA/210 (second sheet) (July 2022)

**INTERNATIONAL SEARCH REPORT**
Information on patent family members

International application No.

**PCT/CN2024/094279**

| Patent document cited in search report | | | Publication date (day/month/year) | Patent family member(s) | | | Publication date (day/month/year) |
|---|---|---|---|---|---|---|---|
| CN | 116703705 | A | 05 September 2023 | None | | | |
| CN | 108629200 | A | 09 October 2018 | None | | | |
| CN | 115170819 | A | 11 October 2022 | None | | | |
| CN | 110262735 | A | 20 September 2019 | WO | 2020252951 | A1 | 24 December 2020 |
| US | 2023141541 | A1 | 11 May 2023 | JPWO | 2021199176 | A1 | 07 October 2021 |
| | | | | JP | 7494903 | B2 | 04 June 2024 |
| | | | | WO | 2021199176 | A1 | 07 October 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310609506